# EUROPÄISCHE PATENTSCHRIFT

(11) **EP 1 570 296 B1**
(45) Veröffentlichungstag und Bekanntmachung des Hinweises auf die Patenterteilung: **25.11.2009**
(21) Anmeldenummer: 03753311.4
(22) Anmeldetag: 18.09.2003
(51) Int. Cl.: G01S 13/44, G01S 7/03

(54) **EINRICHTUNG ZUR MESSUNG VON WINKELPOSITIONEN**
DEVICE FOR MEASURING ANGLE POSITIONS
DISPOSITIF DE MESURE DE POSITIONS ANGULAIRES

(30) Priorität: 04.12.2002 DE 10256524
(43) Veröffentlichungstag der Anmeldung: 07.09.2005
(73) Patentinhaber: ROBERT BOSCH GMBH, 70442 Stuttgart (DE)
(72) Erfinder: FOCKE, Thomas, 31180 Ahrbergen (DE); HANSEN, Thomas, 31139 Hildesheim (DE); SCHNEIDER, Martin, 31139 Hildesheim (DE); SCHOEBEL, Joerg, 38226 Salzgitter (DE); GROSS, Volker, 33699 Bielefeld (DE); BRUEGGEMANN, Oliver, 31241 Ilsede (DE)
(86) Internationale Anmeldenummer: PCT/DE2003/003103
(87) Internationale Veröffentlichungsnummer: WO 2004/051308

(56) Entgegenhaltungen:
- WO-A-00/49423
- US-A- 5 017 927
- US-A- 5 172 122
- US-A- 5 706 012
- US-A- 5 831 570

## Beschreibung

Die Erfindung geht aus von einer Einrichtung zur Messung von Winkelpositionen unter Verwendung von Radarpulsen mit sich gegenseitig überlappende Strahlcharakteristiken mindestens zweier Antennenelemente, gemäß dem Oberbegriff des Anspruches 1, wie aus der U.S. 5,017,927 bekannt.

### Stand der Technik

Radarsensoren zur Erfassung des nahen Kraftfahrzeugumfeldes (SRR, Short Range Radarsensoren) sind für Funktionen wie Rückfahrhilfe, Einparkhilfe, Parklückenvermessung, Tote-Winkel-Überwachung, langsames Folgefahren oder Precrash-Erkennung vorgesehen.

Neben der Information über den Abstand relevanter Objekte (andere Fahrzeuge, Fahrspur- oder Parklückenbegrenzungen, Fußgänger, ...) ist auch die Information über deren Winkelposition retativ zum Fahrzeug wichtig, um die Relevanz erkannter Objekte für die jeweilige Funktion zu beurteilen. Stand der Technik ist es, die Winkelrichtung von Objekten über die sogenannte Trilateration zu errechnen. Hierbei werden die Abstandsinformationen mehrerer benachbarter Sensoren herangezogen, um mittels einfacher trigonometrischer Umrechnungen auch die Winkelablage von Zielen zu bestimmen. Nachteilig an diesem Verfahren ist es, dass immer mehrere Sensoren in gewissem Abstand erforderlich sind, auch um die Position nur eines Ziels zu erfahren. Auch müssen diese Sensoren jeweils ein und dasselbe Ziel erfassen, um keine Fehlschätzungen zu erhalten.

Aus der WO 00/49423 ist ein Monopuls-Phase-Array-Antennensystem bekannt mit Sende- und Empfangsmodulen, die von einer Strahlschwenksteuereinrichtung gesteuert werden. Aus den Empfangssignalen von den verschiedenen Antennenelementen werden Summensignale und Winkeldifferenzsignale abgeleitet. Jedes der Sende- und Empfangsmodule ist mit zwei 180°-Phasenschiebern ausgerüstet, um die Winkeldifferenzsignale zu bestimmen. Zur unabhängigen Zielverfolgung in Azimut- und Elevationsrichtung ist es bekannt, ein Summensignal und zwei Differenzsignale auszuwerten.

Aus M. Skolnik, Introduction to radar systems, second edition, Mc. Graw Hill Book Company 1980, Seiten 160 und 161 ist es bekannt, die Winkelinformation eines Zielobjektes durch zwei sich überlappende Antennen-Strahlcharakteristiken zu gewinnen.

### Vorteile der Erfindung

Mit der Einrichtung gemäß den Merkmalen des Anspruchs 1 ist die Gewinnung von Winkelinformationen aus einem gesamten Radarortungsfeld bei sehr begrenztem zusätzlichen Hardwareaufwand möglich.

In den Unteransprüchen sind vorteilhafte Ausgestaltungen aufgezeigt.

Mit den Maßnahmen der Erfindung muss nicht in jedem Empfangspfad ein eigener Abwärtsmischer und eine eigene NF-Verarbeitung vorgesehen sein. Mit der Erfindung ist es möglich, die Messung von Winkelpositionen bereits in einem Einzelsensor zu realisieren. Das Ortungsfeld kann gegenüber einer Realisierung, die nur zur Abstandsmessung dient, nahezu unverändert sein. Der zusätzliche Hardwareaufwand beschränkt sich auf einfache Phaseschieber mit einfacher Signalauswertung.

Durch die erfindungsgemäße Winkelmessung ist es möglich, die Anzahl der erforderlichen Sensoren für bestimmte Funktionen zu minimieren. Eine Rückfahrhilfe kann mit nur einem winkelmessenden SRR-Sensor ausgestattet werden, wohingegen herkömmliche Systeme drei Sensoren benötigen. Beim langsamen Folgefahren würden mit der erfindungsgemäßen Realisierung nur ein bis zwei Sensoren nötig sein statt drei oder vier Sensoren wie bei herkömmlichen Systemen. Zur Tote-Winkel-Überwachung reicht ein Sensor aus statt der sonst üblichen zwei Sensoren.

### Zeichnungen

Ausführungsbeispiele der Erfindung werden anhand der Zeichnungen erläutert. Es zeigen
Figur 1 eine erfindungsgemäße Realisierung mit Dual-Beam-Antenne und schaltbarem Phasenschieber,
Figur 2 den Amplitudenverlauf eines Dual-Beam-Sensors,
Figur 3 den Phasenverlauf eines Dual-Beam-Sensors,
Figur 4 eine Dual-Beam-Antenne mit Beschaltung,
Figur 5a und b Dual-Beam-Antennen mit 180°-Hybrid,
Figur 6 eine Antennenanordnung mit 2x2 Spalten für Zeitmultiplexbetrieb,
Figur 7 die Antennenanordnung nach Figur 6 mit 180-Hybrid.

### Beschreibung von Ausführungsbeispielen

Bei der Erfindung wird für die Winkelmessung die bekannte Radar-Monopuls-Technik eingesetzt, bei der über den Vergleich von Empfangssignalen in unterschiedlichen, gegenseitig überlappenden Strahlkeulen und Kenntnis der Strahlungscharakteristiken selbst eine Information über die Winkelablage ableitbar ist (vergleichbar mit einem sogenannten "best fit matching" der empfangenen Signale). Dieses Auswerteverfahren ist sehr ähnlich dem, welches auch beim Long Range Radar (LRR, ACC) eingesetzt wird. Beim LRR-Radar werden drei oder vier Empfangskeulen ausgebildet und deren gegenseitige Überlappung zur Winkelschätzung mittels Vergleich der Empfangssignale herangezogen.

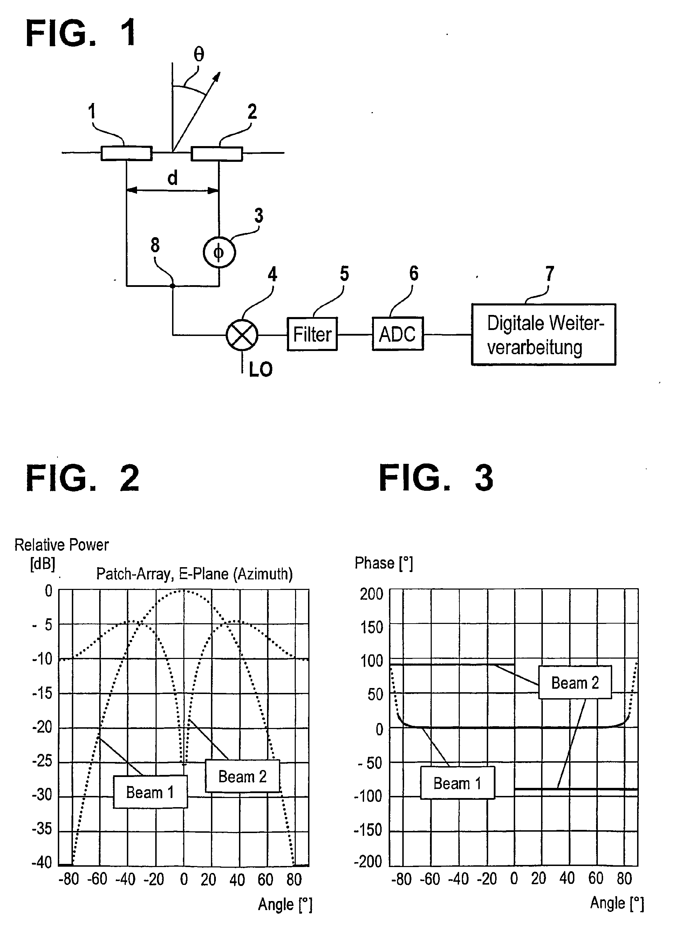

Bei der erfindungsgemäßen Einrichtung zur Messung von Winkelpositionen werden zwei unterschiedliche Empfangscharakteristiken mit möglichst breitem Überlappungsbereich erzeugt. Dazu werden gemäß Figur 1 mindestens zwei Antennenelemente 1 und 2 mit jeweils einstellbaren Schwingungsphasen benutzt. Die unterschiedlichen Phasenzustände werden durch ein zwischengeschaltetes HF-Bauelement erzeugt, im Beispiel gemäß Figur 1 ist dieses ein schaltbarer Phasenschieber 3, der in einem der hier dargestellten zwei Antennenpfade zwischengeschaltet ist. Durch Schalten des Phasenschiebers 3 wird die Schwingungsphase von Antennenelement 2 unterschiedlich zu der von Antennenelement 1 eingestellt, wodurch die Richtcharakteristik der Gesamtanordnung maßgeblich zu beeinflussen ist. Die Signale beider Antennenelemente 1 und 2 werden im Empfangspfad nachfolgend additiv zusammengeführt (Summierknoten 8) und einer Mischereinheit 4 (Mischung mit einem Lokaloszillatorsignal, LO) sowie der Weiterverarbeitung (Filterung 5, Analog/Digitalwandlung (ADC) 6, Auswerteeinrichtung 7) zugeführt.

Figur 2 zeigt beispielhaft für ein einfaches Modell einer Patchantenne (für andere Antennenelement-Charakteristiken ergeben sich geringfügig andere Strahlcharakteristiken) die Amplitudencharakteristiken der Gesamtanordnung für beide Schaltzustände des Phasenschiebers 3. Die Charakteristik von Beam 1 ergibt sich durch gleichphasige Ansteuerung beider Antennenelemente, das heißt der Phasenschieber 3 ist im Schaltzustand 0° (Beam 1 = Summenbeam oder Gleichtaktbeam). In der Hauptstrahlrichtung bildet sich dadurch - durch konstruktive Überlagerung gleichphasiger Anteile - ein Maximum in der gemeinsamen Strahlungscharakteristik. Beam 2 erhält man durch eine Phasenverschiebung von 180° im Pfad von Antennenelement 2 (oder 1), in Hauptstrahlrichtung löschen sich die Anteile von Antennenelement von 1 und 2 dadurch gerade aus (destruktive Überlagerung), so dass die Richtcharakteristik in diese Richtung eine Nullstelle ausbildet (Beam 2 = Differenzbeam oder Gegentaktbeam). Seitlich ergibt sich eine symmetrische Ausformung zweier, im Idealfall identischer Hauptkeulen. In Figur 3 sind die zugehörigen Phasenverläufe beider Empfangscharakteristiken dargestellt. Während die Phase von Beam 1 aus Symmetriegründen (spiegel) symmetrisch zur Hauptstrahlrichtung ist, ergibt sich für Beam 2 ein punktsymmetrischer Verlauf. Dieses ist entscheidend für die beabsichtigte Winkelbestimmung eines Ziels, da nur durch die Unsymmetrie mindestens eines der beiden Phasenverläufe eine Entscheidung darüber möglich ist, ob sich ein Ziel links oder rechts in Bezug zur Orientierung des Sensors befindet.

Zur Winkelbestimmung selbst wird zwischen beiden Phasenzuständen und damit zwischen beiden Empfangs-Richtcharakteristiken hin- und hergeschaltet (Betrieb im Zeitmultiplex). Dieses Schalten erfolgt so schnell, dass der Einfluss von Amplituden- und Phasenänderungen der einfallenden Wellenfront eines Ziels in Folge von Relativbewegungen des Ziels (Zielfluktuationen) oder des Senders in Bezug zur Empfangsantenne vernachlässigbar oder durch entsprechende Korrekturmaßnahmen noch kompensierbar ist. Nur dann ist eine hinreichend genaue Aussage darüber möglich, welcher Anteil an einer relativen Amplituden- und Phasenänderung beider Richtcharakteristiken im Empfangskanal eindeutig der Winkelablage des Ziels zuzuordnen ist und nicht etwa anderer, oben genannter Effekte. Die Schaltperiode sollte andererseits auch nicht zu gering sein, da ansonsten der sehr kostengünstige Ansatz des direkten Mischens des HF-Trägersignals in das NF-Basisband (sogenannter homodyner Ansatz, Basisbandfrequenzanteile im kHz-Bereich) entsprechend modifiziert werden müsste. Zur Gewinnung der optimalen Schaltfrequenz zwischen den Antennencharakteristiken müssen die Relativbewegungen von Zielen bzw. Sensorträger (Ego-Fahrzeug) vernachlässigbar sein oder in der Auswertung (Zielwinkelschätzung) kompensierbar sein (bestimmend für die obere Grenze der Schaltperiode, aber andererseits ein homodyner Ansatz (bestimmend für die untere Grenze der Schaltperiode) verwendbar sein. Bei HF-Trägerfrequenzen im GHz-Bereich sind Schaltperioden im Bereich von wenigen µs z.B. 5 bis 50 µs vorteilhaft.

Sind diese zeitlichen Effekte (Zielfluktuationen, Relativbewegungen) minimal oder entsprechend kompensiert bzw. durch Korrekturgrößen berücksichtigt, so ergibt sich der Winkel des Ziels durch Vergleich der relativen Amplituden- und Phasenänderung im Empfangspfad in beiden Schaltzuständen mit den beiden komplexwertigen Richtcharakteristiken der Antennenanordnung (Summen- und Differenzbeam). Damit über dem gesamten Winkelbereich keine Mehrdeutigkeiten in Bezug auf den Vergleich der Empfangssignale mit den Richtcharakteristiken auftreten, sollten weitere Keulen (Nebenkeulen) in Beam 1 und 2 vermieden werden. Dies ist möglich, wenn z.B. der Abstand d beider Antennenelemente - siehe Figur 1 - im Bereich der halben Wellenlänge ist, z.B. bei 24 GHz ca. 6,5 mm.

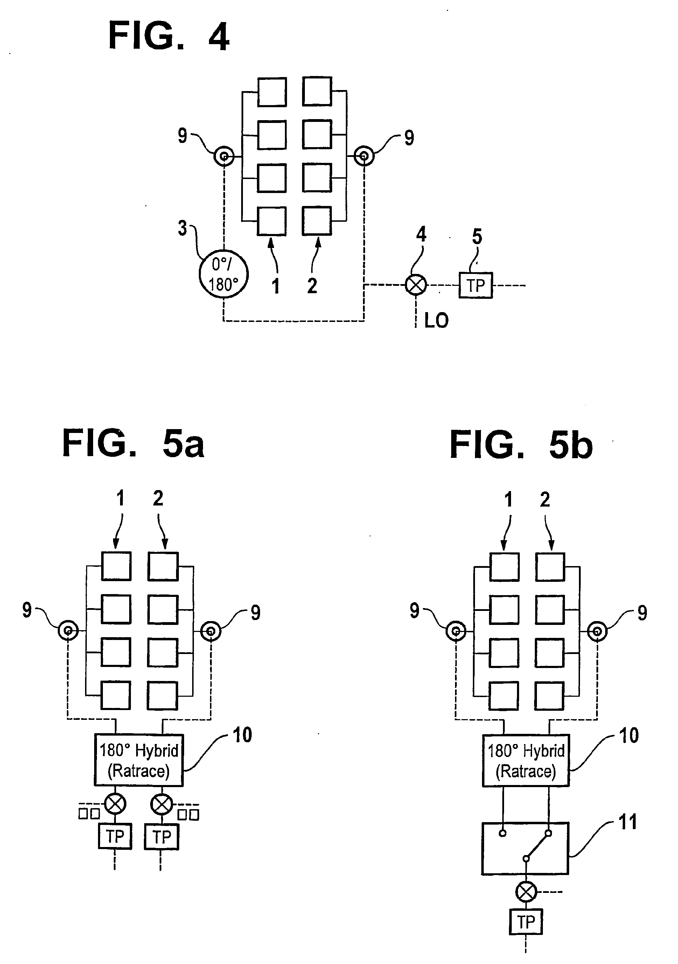

Figur 4 zeigt eine Ausführungsform, wobei die beiden Antennenelemente 1 und 2 hier beispielhaft durch jeweils vier Einzelstrahler gebildet werden. Diese haben die Aufgabe, bei senkrechter Anordnung zur Fahrbahnfläche nach Verbauung beim Fahrzeug, die Energie in vertikaler Richtung zu bündeln (Elevationsbündelung), um hierüber eine entsprechende Reichweite zu erlangen aber auch um nicht zu starke Reflexionen von der Fahrbahn selbst zu erhalten. In der Horizontalebene (Azimut) ergibt sich je Spalte nur eine geringe Bündelung, so dass die Richtdiagramme im Azimut ähnlich denen in Figur 2 sehr breit sind, um einen möglichst großen horizontalen Erfassungsbereich und speziell hier auch eine möglichst breite Überlappung beider Richtdiagramme zu haben.

Die skizzierten Durchführungen 9 in Figur 4 haben die Aufgabe, die HF-Komponenten, die eine Bauteilebestückung erfordern, wie z.B. der 180° Phasenschieber 3, in der Ebene bzw. auf dem Layer zu konzentrieren, wo noch weitere Bestückungen erforderlich sind (Mischer 4, etc.), damit eine doppelseitige Bestückung vermieden wird. Das Filter 5 ist in dieser Ausführung ein Tiefpassfilter TP, sofern dem Radarsensor-Prinzip ein homodyner Ansatz zugrunde liegt, das heißt mit einem Oszillator sowohl gesendet, hier nicht dargestellt, als auch das empfangene Signal direkt ins Basisband gemischt wird (direct conversion). Andere Ausführungsformen sind ebenfalls möglich, z.B. heterodyner Ansatz mit Mischung in eine Zwischenfrequenzebene über weiteren Oszillator, Filterausführung dann als Bandpass.

Figur 5a zeigt noch eine weitere Möglichkeit, wie die Winkelbestimmung nach oben beschriebener Art möglich ist. Als phasenstellendes Element wird hier ein sogenanntes 180°-Hybrid 10, in der Literatur Ratrace genannt, verwendet. Dieses hat die Eigenschaft, ein an einem Tor einfallendes Signal gleichmäßig an die hier gegenüberliegenden Tore aufzuteilen und mit einem relativen Phasenunterschied von 180°, während das vierte Tor isoliert ist. Aufgrund von Reziprozität und Linearität dieses Bauteils ist es genauso möglich, zwei Signale auf zwei Eingangstore zu geben und an den beiden (hier) gegenüberliegenden Toren jeweils das Summen- und das Differenzsignal abzugreifen, hier also Summenbeam und Differenzbeam. Vorteilhaft an diesem Ansatz ist, dass beide Beams zeitgleich vorliegen, so dass der negative Einfluss von Zielfluktuation oder Relativbewegungen hier nicht auftritt. Nachteilig ist, dass beide Tore zur Weiterverarbeitung jeweils einen eigenen Mischer, Filter und AD-Wandler erfordern (Hardwareaufwand).

Alternativ können die beiden Tore des Ratrace auch über einen geeigneten Umschalter 11 einem Mischer im Zeitmultiplex zugeführt werden (Figur 5b).

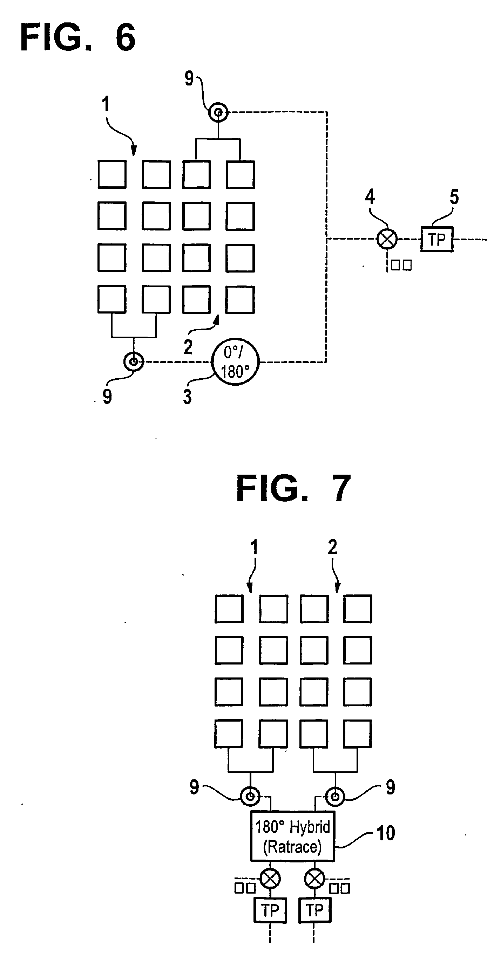

Figur 6 und 7 zeigen noch Ausführungen mit jeweils zwei Spalten je Antennenelement. Durch Ausführung mit mehr als einer Antennenspalte pro Antennenelement ist es möglich, in horizontaler Ebene eine Bündelung der Empfangsenergie zu erhalten. Dadurch ist ein größerer Antennengewinn und damit eine größere Radarreichweite erreichbar, während der Überlappungsbereich von Summen- und Differenzbeam dadurch eingeengt wird. Dieses kann für Funktionen wie z.B. eine Rückfahrhilfe vorteilhaft sein. Ebenfalls kann diese Ausführung vorteilhaft sein für bestimmte Funktionen, bei denen eine gewisse Unterdrückung von Signalen (Störern) im Seitenbereich gerade gewünscht ist, z.B. von Leitplanken oder sonstiger Bebauung am Fahrbahnrand. Dieses wird durch die starke Bündelung mehrspaltiger Antennenelemente direkt unterstützt.

Der Phasenschieber 3 kann vorteilhaft als PIN-Dioden-Phasenschieber ausgebildet sein.

Ein Radarsensor nach der Erfindung kann in einer Hochintegrationsausgestaltung den Phasenschieber oder gegebenenfalls den Umschalter, die Signalzusammenführung (T-Verzweigung, Wilkinson-Teiler, o.ä.), den Mischer und gegebenenfalls zusätzliche rauscharme Vorverstärker (LNAs) in einem MMIC (monolithic microwave integrated circiut) enthalten.

Als Phasenschieber 3 kann auch ein RF MEMS 180° Phasenschieber (RF: Radio Frequency, MEMS: Microelectromechanical System) verwendet werden.

Die Antennenelement können in unterschiedlicher Ausführung vorgesehen sein: Einzelstrahler, Spalten, mehrere Spalten gemeinsam je Antennenelement, sogenannte Patchstrahler, etc.

Als Umschalter 11 können PIN-Dioden-Schalter oder MEMS-Schalter verwendet werden.

## Patentansprüche

1. Einrichtung zur Messung von Winkelpositionen von Objekten unter Verwendung von Radarpulsen und sich gegenseitig überlappenden Antennen-Strahlcharakteristiken mindestens zweier Antennenelemente (1, 2) mit folgenden Merkmalen:
- im Signalweg mindestens eines Antennenelements (2) ist ein schaltbarer Phasenschieber (3) vorgesehen, der im Zeitmultiplex zwischen unterschiedlichen Phasenzuständen schaltbar ist und damit die Strahlungscharakteristik des betroffenen Antennenelements ändert,
- es ist eine Auswertung (7) vorgesehen zur Auswertung von den addierten Empfangssignalen der mindestens zwei Antennenelemente (1, 2) unter Beteiligung des mindestens einen Antennenelements (2), in dessen Signalweg der schaltbare Phasenschieber (3) vorgesehen ist;
**dadurch gekennzeichnet, dass**
die Einrichtung ausgestaltet ist, den Winkel eines Objekts durch Vergleich der relativen Amplituden- und Phasenänderungen von Radarpulsen im Empfangspfad in beiden Schaltzuständen des mindestens einen schaltbaren Phasenschiebers (3) zu gewinnen.

2. Einrichtung nach Anspruch 1, **dadurch gekennzeichnet, dass** der schaltbare Phasenschieber (3) eingerichtet ist, die Phasenzustände 0° und 180° einzunehmen.

3. Einrichtung nach einem der Ansprüche 1 oder 2, **dadurch gekennzeichnet, dass** die mindestens zwei Antennenelemente (1,2) über ein 180°-Hybrid (10) als phasenstellendes Element verbunden sind zur insbesondere zeitgleichen Auswertung von Summen- und Differenzbeam der mindestens zwei Antennenelemente (1,2).

4. Einrichtung nach einem der Ansprüche 1 oder 2, **dadurch gekennzeichnet, dass** die mindestens zwei Antennenelemente (1, 2) über ein 180°-Hybrid (10) als phasenstellendes Element verbunden sind und dass ein Umschalter (11) am Ausgang des 180°-Hybrids vorgesehen ist zur Auswertung von Summen- und Differenzbeam der mindestens zwei Antennenelemente (1, 2) über einen Mischer im Zeitmultiplex.

5. Einrichtung nach einem der Ansprüche 1 bis 4, **dadurch gekennzeichnet, dass** die Umschaltzeit des mindestens einen Phasenschiebers (3) und damit die Umschaltzeit zwischen zwei Strahlcharakteristiken so einstellbar ist, dass die Relativbewegungen von Objekten oder der Antennenelementträger vernachlässigbar oder in der Auswertung kompensierbar sind.

6. Einrichtung nach einem der Ansprüche 1 bis 5, **dadurch gekennzeichnet, dass** die Umschaltzeit des mindestens einen Phasenschiebers (3) und damit die Umschaltzeit zwischen zwei Strahlungscharakteristiken mindestens so einstellbar ist, dass das Homodyn-Prinzip anwendbar ist.

7. Einrichtung nach Anspruch 5 oder 6, **dadurch gekennzeichnet, dass** bei Betrieb im GHz-Bereich die Umschaltzeit im Bereich zwischen 5 und 50 µs einstellbar ist.

8. Einrichtung nach einem der Ansprüche 1 bis 7, **dadurch gekennzeichnet, dass** zur Elevations- und/oder Azimutbündelung mehr als zwei Antennenelemente insbesondere in Zeilen- und Spaltenanordnung vorgesehen sind, wobei vorzugsweise jeweils mindestens zwei Gruppen von Antennenelementen gemeinsam und gleichzeitig auswertbar sind und wobei im Signalweg mindestens einer Gruppe der umschaltbare Phasenschieber (3) angeordnet ist.

9. Einrichtung nach einem der Ansprüche 1 bis 8, **dadurch gekennzeichnet, dass** der mindestens eine Phasenschieber (3) als PIN-Dioden-Phasenschieber oder MEMS-Phasenschieber ausgebildet ist.

10. Einrichtung nach einem der Ansprüche 1 bis 9, **dadurch gekennzeichnet, dass** HF-Komponenten vorgesehen sind, die eine Bauteilbestückung erfordern, welche auf nur einer Seite einer Leiterplatte aufgebracht sind, insbesondere auf der den Antennenelementen (1, 2) abgewandten Seite.

## Claims

1. Device for measurement of angular positions of objects using radar pulses and mutually overlapping antenna beam characteristics of at least two antenna elements (1, 2), having the following features:
- a switchable phase shifter (3) is provided in the signal path of at least one antenna element (2) and can be switched between different phase states using time-division multiplexing, thus changing the radiation characteristic of the relevant antenna element,
- an evaluation means (7) is provided for evaluation of the added received signals of the at least two antenna elements (1, 2), with the involvement of the at least one antenna element (2) in whose signal path the switchable phase shifter (3) is provided;
**characterized in that**
the device is designed to obtain the angle of an object by comparison of the relative amplitude and phase changes of radar pulses in the reception path in both switching states of the at least one switchable phase shifter (3).

2. Device according to Claim 1, **characterized in that** the switchable phase shifter (3) is designed to assume the phase states 0° and 180°.

3. Device according to one of Claims 1 or 2, **characterized in that** the at least two antenna elements (1, 2) are connected via a 180° hybrid (10) as a phase-controlling element, for in particular simultaneous evaluation of a sum beam and difference beam of the at least two antenna elements (1, 2).

4. Device according to one of Claims 1 or 2, **characterized in that** the at least two antenna elements (1, 2) are connected via a 180° hybrid (10) as a phase-controlling element, and **in that** a changeover switch (11) is provided at the output of the 180° hybrid, for evaluation of the sum and difference beam of the at least two antenna elements (1, 2) via a mixer, using time-division multiplexing.

5. Device according to one of Claims 1 to 4, **characterized in that** the switching time of the at least one phase shifter (3) and therefore the switching time between two beam characteristics can be adjusted such that the relative movements of objects or of the antenna element mounts are negligible or can be compensated for in the evaluation.

6. Device according to one of Claims 1 to 5, **characterized in that** the switching time of the at least one phase shifter (3) and therefore the switching time between two radiation characteristics can be adjusted at least such that the homodyne principle can be used.

7. Device according to Claim 5 or 6, **characterized in that**, when operating in the GHz range, the switching time is adjustable in the range between 5 and 50 µs.

8. Device according to one of Claims 1 to 7, **characterized in that** more than two antenna elements are provided in particular in a row and column arrangement for elevation and/or azimuth focusing, in which case preferably in each case at least two groups of antenna elements can be evaluated jointly and simultaneously, and in which case at least one group of the switchable phase shifters (3) is arranged in the signal path.

9. Device according to one of Claims 1 to 8, **characterized in that** the at least one phase shifter (3) is in the form of a PIN diode phase shifter or MEMS phase shifter.

10. Device according to one of Claims 1 to 9, **characterized in that** RF components are provided which require parts to be fitted to only one side of a printed circuit board, in particular on the side facing away from the antenna elements (1, 2).

## Revendications

1. Dispositif pour mesurer la position angulaire d'objets en utilisant des impulsions radar et les caractéristiques de rayonnement d'antennes qui se chevauchent mutuellement d'au moins deux éléments d'antenne (1, 2), ayant les caractéristiques suivantes :
- un déphaseur commutable (3) est prévu dans le trajet du signal d'au moins un élément d'antenne (2), lequel peut être commuté en multiplexage dans le temps entre différentes positions de phase et modifie ainsi la caractéristique de rayonnement de l'élément d'antenne concerné,
- il est prévu un dispositif d'interprétation (7) pour interpréter les signaux reçus additionnés des au moins deux éléments d'antenne (1, 2) avec la participation de l'au moins un élément d'antenne (2) dans le trajet du signal duquel est prévu le déphaseur commutable (3) ;
**caractérisé en ce que**
le dispositif est configuré pour obtenir l'angle d'un objet en comparant les modifications relatives d'amplitude et de phase des impulsions radar dans le chemin de réception dans les deux états de commutation de l'au moins un déphaseur commutable (3).

2. Dispositif selon la revendication 1, **caractérisé en ce que** le déphaseur commutable (3) est conçu pour adopter les positions de phase 0° et 180°.

3. Dispositif selon l'une des revendications 1 ou 2, **caractérisé en ce que** les au moins deux éléments d'antenne (1, 2) sont reliés par le biais d'un hybride de 180° (10) faisant office d'élément de réglage de phase, notamment pour l'interprétation simultanée du faisceau total et différentiel des au moins deux éléments d'antenne (1, 2).

4. Dispositif selon l'une des revendications 1 ou 2, **caractérisé en ce que** les au moins deux éléments d'antenne (1, 2) sont reliés par le biais d'un hybride de 180° (10) faisant office d'élément de réglage de phase et qu'il est prévu à la sortie de l'hybride de 180° un inverseur (11) pour l'interprétation du faisceau total et différentiel des au moins deux éléments d'antenne (1, 2) par le biais d'un mélangeur en multiplexage dans le temps.

5. Dispositif selon l'une des revendications 1 à 4, **caractérisé en ce que** le temps d'inversion de l'au moins un déphaseur (3) et ainsi le temps d'inversion entre deux caractéristiques de rayonnement est réglable de telle sorte que les mouvements relatifs des objets ou des supports d'élément d'antenne sont négligeables ou peuvent être compensés dans l'interprétation.

6. Dispositif selon l'une des revendications 1 à 5, **caractérisé en ce que** le temps d'inversion de l'au moins un déphaseur (3) et ainsi le temps d'inversion entre deux caractéristiques de rayonnement est au moins réglable de telle sorte qu'il est possible d'appliquer le principe homodyne.

7. Dispositif selon la revendication 5 ou 6, **caractérisé en ce que** lors d'un fonctionnement dans la plage des GHz, le temps d'inversion est réglable entre 5 et 50 µs.

8. Dispositif selon l'une des revendications 1 à 7, **caractérisé en ce que** plus de deux éléments d'antenne sont prévus pour la directivité en élévation et/ou en azimut, notamment disposés en lignes et en colonnes, au moins deux groupes d'éléments d'antenne pouvant de préférence à chaque fois être interprétés communément et simultanément et le déphaseur à inversion (3) étant prévu dans le trajet du signal d'au moins un groupe.

9. Dispositif selon l'une des revendications 1 à 8, **caractérisé en ce que** l'au moins un déphaseur (3) est réalisé sous la forme d'un déphaseur à diode PIN ou d'un déphaseur MEMS.

10. Dispositif selon l'une des revendications 1 à 9, **caractérisé en ce que** sont prévus des composants HF qui nécessitent une implantation des composants d'un seul côté d'un circuit imprimé, notamment sur le côté opposé aux éléments d'antenne (1, 2).
